# EUROPÄISCHE PATENTSCHRIFT

(11) **EP 3 658 415 B1**
(45) Veröffentlichungstag und Bekanntmachung des Hinweises auf die Patenterteilung: **21.04.2021**
(21) Anmeldenummer: 18743715.7
(22) Anmeldetag: 12.07.2018
(51) Int. Cl.: B60R 7/02, B60R 11/00, B60R 11/06, B60R 13/01

(54) **VORRICHTUNG ZUR AUFNAHME EINES GEGENSTANDS IN EINEM KRAFTFAHRZEUG**
APPARATUS FOR RECEIVING AN OBJECT IN A MOTOR VEHICLE
DISPOSITIF DE LOGEMENT D'UN OBJET DANS UN VÉHICULE À MOTEUR

(30) Priorität: 26.07.2017 DE 102017007060
(43) Veröffentlichungstag der Anmeldung: 03.06.2020
(73) Patentinhaber: Audi AG, 85045 Ingolstadt (DE)
(72) Erfinder: DESEYVE, Eric, 85122 Hitzhofen (DE); ZACHERL, Matthias, 92345 Dietfurt (DE); MOUSSA, Ahmed, 85051 Ingolstadt (DE); GROß, Sidney, 85057 Ingolstadt (DE)
(86) Internationale Anmeldenummer: PCT/EP2018/068866
(87) Internationale Veröffentlichungsnummer: WO 2019/020386

(56) Entgegenhaltungen:
- WO-A1-2018/114146
- DE-A1-102006 020 953
- US-A1- 2016 214 540

## Beschreibung

Die Erfindung betrifft eine Vorrichtung zur Aufnahme eines Gegenstands in einem Kraftfahrzeug.

Eine gattungsgemäße Vorrichtung ist aus der nicht vorveröffentlichten WO 2018/114146 A1 bekannt.

Eine weitere Vorrichtung zur Aufnahme eines Gegenstands in einem Kraftfahrzeug ist in der US 2016/021540 A1 beschrieben. Diese Vorrichtung beruht auf einer reibschlüssigen Verbindung zwischen den eine Einführöffnung bildenden Wänden derselben und dem einzuführenden Gegenstand.

Aus der DE 10 2006 020 953 B4 ist eine Vorrichtung zur Aufnahme eines in einem Kraftfahrzeug verwendeten Gegenstandes bekannt. Diese Vorrichtung weist einen mittels eines Deckels verschließbaren Aufnahmeraum auf, um den Gegenstand aufzunehmen und sicher zu halten. Der Deckel und die an demselben angebrachten Verriegelungselemente verursachen jedoch erhöhte Materialkosten und einen Mehraufwand bei der Montage. Ein weiterer Nachteil dieser Lösung besteht darin, dass der Gegenstand für den Kunden bei geschlossenem Deckel nicht unmittelbar zu erkennen ist. Im Falle eines beispielsweise in der Verkleidung einer Kofferraumklappe angeordneten Warndreiecks ist dies jedoch ein Problem, da ein Warndreieck unmittelbar zu erkennen sein sollte, um im Notfall keine Verzögerungen auszulösen.

Die DE 10 2014 207 362 A1 beschreibt eine ähnliche Vorrichtung, bei welcher der Gegenstand mittels an den Längsseiten einer Ausnehmung angeordneten Federelementen in seiner Position gehalten ist. Der Nachteil dieser bekannten Vorrichtung ist jedoch die aufwändige Anordnung des Gegenstands in der Ausnehmung, da dieser gegen die Kraft zweier einander entgegenwirkender Federelemente in die Ausnehmung eingesetzt werden muss.

Es ist daher Aufgabe der vorliegenden Erfindung, eine Vorrichtung zur Aufnahme eines Gegenstands in einem Kraftfahrzeug zu schaffen, die mit einem geringen Aufwand hergestellt werden kann und die einen geringen Aufwand bei der Montage und insbesondere der Demontage bzw. dem Entnehmen des Gegenstands erfordert.

Erfindungsgemäß wird diese Aufgabe durch die in Anspruch 1 genannten Merkmale gelöst.

Durch die erfindungsgemäße Ausführung des Aufnahmeraums und deren Einführöffnung im Verhältnis zu der Größe und der Form des aufzunehmenden Gegenstands ist es möglich, den Gegenstand mit der flacheren Seite durch die Einführöffnung in den Aufnahmeraum einzuführen, um einen Winkel von ca. 90° zu drehen und den Gegenstand aufgrund der erfindungsgemäßen Ausführung der Einführöffnung, die zumindest abschnittsweise eine geringere Breite als die Länge der Seitenkante mit der mittleren Länge aufweist, zu fixieren, sodass der Gegenstand auch im Crashfall sicher in dem Aufnahmeraum gehalten ist. Dabei wird vorteilhafterweise die quaderförmige Gestalt des Gegenstands ausgenutzt und der Aufnahmeraum entsprechend ausgeführt.

Die erfindungsgemäße Lösung zeichnet sich durch die geringe Anzahl an Bauteilen aus, was die Kosten derselben gegenüber bekannten Lösungen wesentlich reduziert, da nicht nur geringere Materialkosten, sondern auch ein niedriger Montageaufwand gegeben sind. Ein weiterer Vorteil der erfindungsgemäßen Lösung besteht darin, dass zur Montage und zur Demontage keine zusätzlichen Werkzeuge notwendig sind. Des Weiteren wird durch den Verzicht auf einen Deckel eine bessere Sichtbarkeit und eine gute Zugänglichkeit für den Gegenstand gewährleistet, was im Ernstfall große Vorteile mit sich bringen kann.

Erfindungsgemäß ist des Weiteren vorgesehen, dass die Tiefe des Aufnahmeraums wenigstens der Länge der Seitenkante des Gegenstands mit der mittleren Länge entspricht, und dass die Höhe des Aufnahmeraums wenigstens der Länge der Seitenkante des Gegenstands mit der mittleren Länge entspricht. Dadurch kann der Gegenstand auf sehr einfache Weise in dem Aufnahmeraum verdreht und in seine Lagerungsposition gebracht werden.

Erfindungsgemäß ist außerdem vorgesehen, dass der Aufnahmeraum eine Vertiefung aufweist, deren Erstreckung in Richtung der Tiefe des Aufnahmeraums wenigstens annähernd der Länge der kürzesten Seitenkante des Gegenstands entspricht. Durch die Vertiefung wird ein weiteres Hintergreifen des Gegenstands in dem Aufnahmeraum erreicht, was den zuverlässigen Halt desselben in dem Aufnahmeraum verbessert. Außerdem ist auf diese Weise eine einfache Ausführung der formschlüssigen Unterbringung des Gegenstands in dem Aufnahmeraum gegeben.

Eine vorteilhafte Ausgestaltung der Erfindung kann darin bestehen, dass der Gegenstand in dem Aufnahmeraum formschlüssig und kraftschlüssig gehalten ist. Die Kombination aus einer formschlüssigen und einer kraftschlüssigen Unterbringung des Gegenstands in dem Aufnahmeraum ermöglicht ein einfaches Montieren und insbesondere Entnehmen des Gegenstands in bzw. aus dem Aufnahmeraum und gewährleistet außerdem, dass der Gegenstand sicher in dem Aufnahmeraum gehalten ist.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: einen Gegenstand, der mittels der erfindungsgemäßen Vorrichtung aufgenommen werden soll;
- Fig. 2: eine perspektivische Darstellung einer erfindungsgemäßen Vorrichtung in einem ersten Schritt der Einführung des Gegenstands in dem Aufnahmeraum der Vorrichtung;
- Fig. 3: die Vorrichtung aus Fig. 2 in einem zweiten Schritt;
- Fig. 4: die Vorrichtung aus Fig. 2 und Fig. 3 in einem dritten Schritt;
- Fig. 5: eine vergrößerte Darstellung nach der Linie V aus Fig. 4;
- Fig. 6: eine Vorderansicht einer weiteren Ausführungsform der Vorrichtung; und
- Fig. 7: eine vergrößerte Darstellung der Vorrichtung aus Fig. 6.

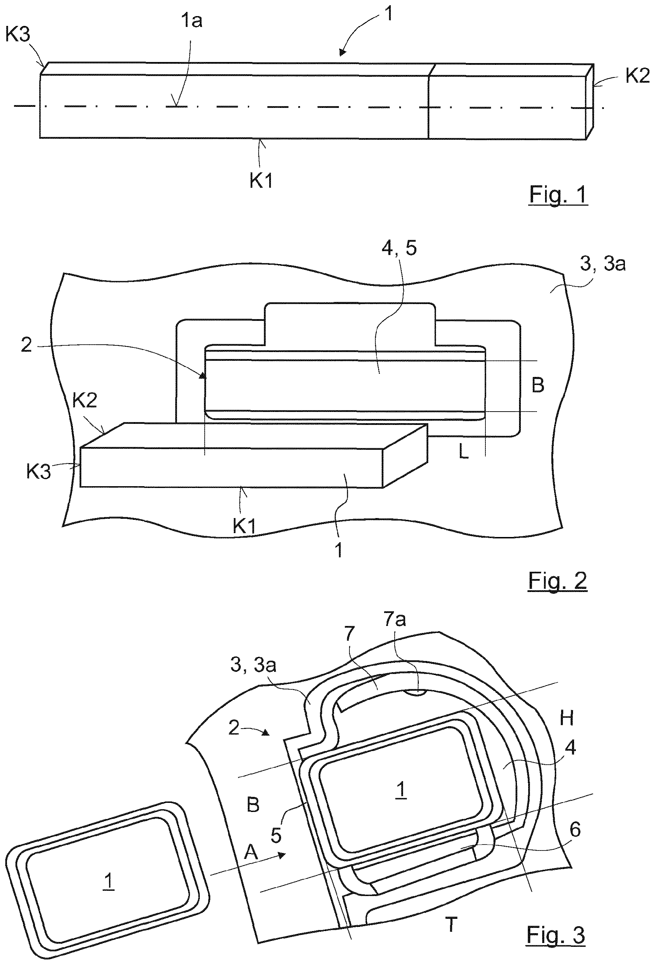

Fig. 1 zeigt einen Gegenstand 1, der mittels einer nachfolgend beschriebenen Vorrichtung 2 in einem nicht dargestellten Kraftfahrzeug aufgenommen werden kann. Bei dem Gegenstand 1 handelt es sich im vorliegenden Fall um eine Verpackung eines nicht dargestellten Warndreiecks, das in einer in den Figuren 2 bis 7 dargestellten Verkleidung 3 einer Kofferraumklappe des Kraftfahrzeugs aufgenommen werden soll.

Der Gegenstand 1 weist eine Quaderform mit drei unterschiedlich langen Seitenkanten K1, K2 und K3 auf. Hierbei weist die Seitenkante K1 die größte Länge, die Seitenkante K2 die mittlere Länge und die Seitenkante K3 die kleinste Länge auf. Mit anderen Worten handelt es sich bei der Seitenkante K1 um die längste Seitenkante und bei der Seitenkante K3 um die kürzeste Seitenkante des Gegenstands 1. Die Länge der Seitenkante K2 liegt zwischen den Längen der Seitenkanten K1 und K3. Im vorliegenden Fall ist die Länge der längsten Seitenkante K1 wesentlich länger als die beiden Längen der Seitenkanten K2 und K3.

Zur Aufnahme des Gegenstands 1 weist die Verkleidung 3 einen Aufnahmeraum 4 auf, der durch mehrere Wandungen 3a der Verkleidung 3 begrenzt ist. Die Figuren 2, 3, 4 und 5 zeigen den zur Aufnahme des Gegenstands 1 dienenden Aufnahmeraum 4 in verschiedenen Ansichten. Der Aufnahmeraum 4 weist eine Einführöffnung 5 auf, durch die der Gegenstand 1 gemäß dem Pfeil "A" in Fig. 3 in den Aufnahmeraum 4 eingeführt werden kann. Die Länge L der Einführöffnung 5 entspricht wenigstens der Länge der längsten Seitenkante K1 des Gegenstands 1. Die Breite B der Einführöffnung 5 entspricht wenigstens der Länge der kürzesten Seitenkante K3 des Gegenstands 1, ist jedoch zumindest abschnittsweise geringer als die Länge der Seitenkante K2 mit der mittleren Länge. Dadurch kann der Gegenstand 1 nur mit seiner kürzesten Seitenkante K3 in die Einführöffnung 5 eingeführt werden. Umgekehrt ist es selbstverständlich auch nur möglich, den Gegenstand 1 mit seiner kürzesten Seitenkante K3 durch die Einführöffnung 5 aus dem Aufnahmeraum 4 zu entnehmen.

Des Weiteren weist der Aufnahmeraum 4 eine derartige Größe auf, dass der Gegenstand nach seinem Einführen durch die Einführöffnung 5 in den Aufnahmeraum 4 um einen Winkel von wenigstens annähernd 90° um seine Längsachse 1a verdrehbar ist und in dem Aufnahmeraum 4 in eine Lagerungsposition gebracht werden kann. Die Tiefe T des Aufnahmeraums 4 entspricht wenigstens der Länge der Seitenkante K2 mit der mittleren Länge. Die Höhe H des Aufnahmeraums 4 entspricht wenigstens der Länge der Seitenkante K2 mit der mittleren Länge. Auf diese Weise ist die Drehbarkeit des Gegenstands 1 um seine Längsachse 1a gegeben.

Mit der Angabe "wenigstens" ist im vorliegenden Fall jeweils gemeint, dass die entsprechenden Abmessungen des Aufnahmeraums 4 auch größer sein können. Da in einem Kraftfahrzeug üblicherweise jedoch nur wenig Platz vorhanden ist, wird man die Abmessungen des Aufnahmeraums 4 nur unwesentlich größer als die genannten Abmessungen der Seitenkanten K1, K2 und K3 des Gegenstands 1 wählen.

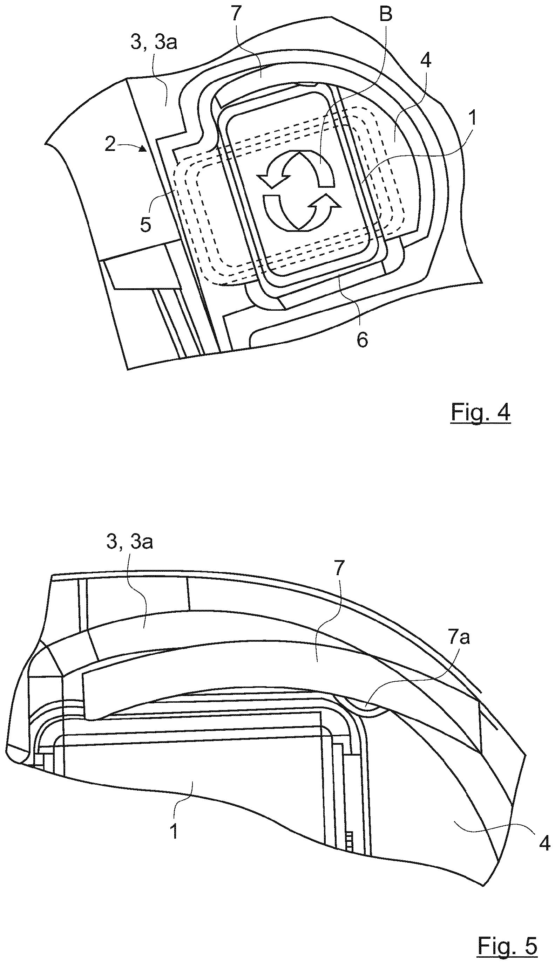

Während Fig. 3 das Einführen des Gegenstands 1 durch die Einführöffnung 5 in den Aufnahmeraum 4 zeigt, ist in Fig. 4 die um 90° verdrehte Lagerungsposition des Gegenstands 1 in dem Aufnahmeraum 4 dargestellt. Die Position des Gegenstands 1 nach dem Einführen gemäß dem Pfeil A aus Fig. 3 ist in Fig. 4 durch gestrichelte Linien dargestellt. Die Drehung des Gegenstands 1 erfolgt bei der Darstellung der Figuren 3 und 4 gemäß dem Pfeil B entgegen dem Uhrzeigersinn. Selbstverständlich wäre bei einer Betrachtung des Aufnahmeraums 4 von der gegenüberliegenden Seite eine Drehung im Uhrzeigersinn gegeben. Da das Entnehmen des Gegenstands 1 aus dem Aufnahmeraum 4 in umgekehrter Weise zum Einführen desselben erfolgt, entspricht die Darstellung von Fig. 3 auch einer solchen Entnahme.

In Fig. 4 ist erkennbar, dass der Gegenstand 1 aufgrund der Tatsache, dass er in der um 90° verdrehten Lagerungsposition höher ist als die Breite B der Einführöffnung 5, nicht ohne Weiteres aus dem Aufnahmeraum 4 entnommen werden kann. Dadurch wird ein Verlieren des Gegenstands 1 verhindert. Zum Entnehmen des Gegenstands 1 aus dem Aufnahmeraum 4 ist vielmehr ein Verdrehen um 90° entgegen dem Pfeil B erforderlich, um denselben mit der kürzesten Seitenkante K3 durch die Einführöffnung 5 zu entnehmen.

Aus Fig. 4 ergibt sich des Weiteren, dass der Aufnahmeraum 4 eine Vertiefung 6 aufweist, deren Erstreckung in Richtung der Tiefe T des Aufnahmeraums 4 wenigstens annähernd der Länge der kürzesten Seitenkante K3 des Gegenstands 1 entspricht. Dadurch ergibt sich eine formschlüssige Aufnahme des unteren Bereichs des Gegenstands 1 in dem Aufnahmeraum 4. Durch die Vertiefung 6 wird außerdem eine zusätzliche Lagefixierung des Gegenstands 1 in dem Aufnahmeraum 4 erreicht und ein Herausrutschen desselben verhindert.

Des Weiteren ist in dem Aufnahmeraum 4 auf der der Vertiefung 6 gegenüberliegenden Seite, im vorliegenden Fall der Oberseite des Aufnahmeraums 4, ein Federelement 7 vorgesehen, das in den Aufnahmeraum 4 ragt. Durch das Federelement 7 ergibt sich eine kraftschlüssige Halterung des Gegenstands 1 in dem Aufnahmeraum 4. Das Federelement 7 ist bei der dargestellten Ausführungsform einteilig mit einer den Aufnahmeraum 4 bildenden Wandung 3a der Verkleidung 3 ausgebildet. Beim oben beschriebenen Verdrehen des Gegenstands 1 wird dieser gegen das Federelement 6 gepresst. Das Federelement 6 erzeugt dabei in der Lagerungsposition eine Gegenkraft auf den Gegenstand 1 und hält diesen somit in der Lagerungsposition. Durch das Federelement 7 wird der Gegenstand 1 also in dem Aufnahmeraum 4 verspannt, so dass ein Klappern oder andere Geräuschentwicklungen vermieden werden.

Durch die Kombination der Vertiefung 6 einerseits und des Federelements 7 andererseits ergibt sich also eine kombinierte Halterung des Gegenstands 1 in dem Aufnahmeraum 4 mittels Form- und Kraftschluss.

Das Federelement 7, von dem über die Länge des Aufnahmeraums 4 vorzugsweise wenigstens zwei vorgesehen sind, ist vorzugsweise so angeordnet, dass es sich in geschlossenem Zustand der Heckklappe oberhalb des Gegenstands 1 befindet, um nicht stets mit dem Gewicht desselben belastet zu sein.

Alternativ zu dem Federelement 7 wäre es auch möglich, die Nachgiebigkeit des für die Wandung 3a der Verkleidung 3 verwendeten Kunststoffwerkstoffs auszunutzen, um auf diese Weise eine Fixierung des Gegenstands 1 in dem Aufnahmeraum 4 zu erzielen. Gegebenenfalls könnte in diesem Bereich auch ein anderes, vorzugsweise weicheres Material verwendet werden.

Des Weiteren weist das Federelement 7 im vorliegenden Fall ein Verrastelement 7a auf, dessen Abstand von der Einführöffnung 5 wenigstens annähernd der Länge der kürzesten Seitenkante K3 des Gegenstands 1 entspricht. Durch das Verrastelement 7a wird erreicht, dass der Gegenstand 1 in der Lagerungsposition bzw. seiner Endlage in dem Aufnahmeraum 4 einrastet. Durch das Verrastelement 7a ergibt sich außerdem zusammen mit dem vorderen Bereich der Wandung 3a eine weiterer Formschluss zum Halten des Gegenstands 1 in dem Aufnahmeraum 4.

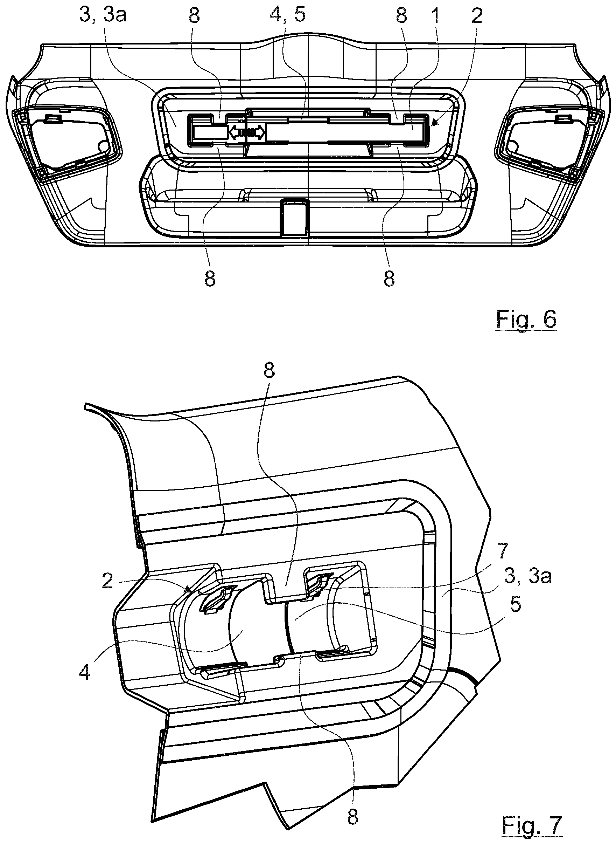

In den Figuren 6 und 7 ist eine sehr ähnliche Ausführungsform der Vorrichtung 2 dargestellt, bei welcher Vorsprünge 8 erkennbar sind, welche einteilig mit der Verkleidung 3 ausgeführt sind und sich in die Einführöffnung 5 hinein erstrecken. Diese Vorsprünge 8, die vorzugsweise auch bei der Ausführungsform der Figuren 2 bis 4 vorgesehen sind, verringern die Breite B der Einführöffnung 5 so, dass der Gegenstand 1 wie oben beschrieben lediglich mit der kürzesten Seitenkante K3 in die Einführöffnung 5 eingeführt und aus derselben entnommen werden kann, da die Länge der Seitenkante K2 mit der mittleren Länge die Breite B der Einführöffnung 5 im Bereich der Vorsprünge 8 überschreitet. Grundsätzlich könnten sich die Vorsprünge 8 auch über die gesamte Länge L der Einführöffnung 5 erstrecken, auf die dargestellte Weise ist jedoch das Einsparen von Material möglich. Die Vorsprünge 8 befinden sich vorzugsweise auf beiden Seiten der Einführöffnung 5, können sich jedoch, wie dargestellt, auf den jeweiligen Seiten unterschiedlich weit in die Einführöffnung 5 hinein erstrecken.

## Patentansprüche

1. Vorrichtung (2) zur Aufnahme eines quaderförmigen, drei unterschiedlich lange Seitenkanten (K1,K2,K3) aufweisenden Gegenstands (1) in einem Kraftfahrzeug, mit einem Aufnahmeraum (4), welcher eine Einführöffnung (5) aufweist, deren Länge (L) wenigstens der Länge der längsten Seitenkante (K1) des Gegenstands (1) entspricht und deren Breite (B) wenigstens der Länge der kürzesten Seitenkante (K3) des Gegenstands (1) entspricht, jedoch zumindest abschnittsweise geringer ist als die Länge der Seitenkante (K2) des Gegenstands (1) mit der mittleren Länge, wobei der Aufnahmeraum (4) eine derartige Größe aufweist, dass der Gegenstand (1) nach seinem Einführen durch die Einführöffnung (5) in dem Aufnahmeraum (4) um einen Winkel von wenigstens annähernd 90° um seine Längsachse (1a) verdrehbar und in dem Aufnahmeraum (4) in eine Lagerungsposition bringbar ist,
**dadurch gekennzeichnet, dass**
die Tiefe (T) des Aufnahmeraums (4) wenigstens der Länge der Seitenkante (K2) des Gegenstands (1) mit der mittleren Länge entspricht, und dass die Höhe (H) des Aufnahmeraums (4) wenigstens der Länge der Seitenkante (K2) des Gegenstands (1) mit der mittleren Länge entspricht, und dass der Aufnahmeraum (4) eine Vertiefung (6) aufweist, deren Erstreckung in Richtung der Tiefe (T) des Aufnahmeraums (4) wenigstens annähernd der Länge der kürzesten Seitenkante (K3) des Gegenstands (1) entspricht.

2. Vorrichtung nach Anspruch 1,
**dadurch gekennzeichnet, dass**
der Gegenstand (1) in dem Aufnahmeraum (4) formschlüssig und kraftschlüssig gehalten ist.

3. Vorrichtung nach Anspruch 1 oder 2,
**dadurch gekennzeichnet, dass**
in dem Aufnahmeraum (4) ein Federelement (7) vorgesehen ist.

4. Vorrichtung nach Anspruch 3,
**dadurch gekennzeichnet, dass**
das Federelement (7) einteilig mit einer den Aufnahmeraum (4) bildenden Wandung (3a) ausgebildet ist.

5. Vorrichtung nach Anspruch 3 oder 4,
**dadurch gekennzeichnet, dass**
das Federelement (7) ein Verrastelement (7a) aufweist, dessen Abstand von der Einführöffnung (5) wenigstens annähernd der Länge der kürzesten Seitenkante (K3) des Gegenstands (1) entspricht.

6. Vorrichtung nach einem der Ansprüche 1 bis 5,
**gekennzeichnet durch**
sich in die Einführöffnung (5) hinein erstreckende Vorsprünge (8).

7. Vorrichtung nach einem der Ansprüche 1 bis 6,
**dadurch gekennzeichnet, dass**
der Gegenstand (1) eine Verpackung eines Warndreiecks ist.

8. Vorrichtung nach einem der Ansprüche 1 bis 7,
**dadurch gekennzeichnet, dass**
der Aufnahmeraum (4) in einer Verkleidung (3) einer Kofferraumklappe des Kraftfahrzeugs vorgesehen ist.

## Claims

1. Device (2) for receiving a cuboidal object (1), which has three side edges (K1, K2, K3) of different length, in a motor vehicle, having a mounting frame (4) which has an insertion opening (5), the length (L) of which corresponds at least to the length of the longest side edge (K1) of the object (1) and the width (B) of which corresponds at least to the length of the shortest side edge (K3) of the object (1) but, at least in sections, is smaller than the length of the side edge (K2) of the object (1) with the medium length, wherein the mounting frame (4) has a size such that the object (1), after being inserted into the mounting frame (4) through the insertion opening (5), can be rotated through an angle of at least approximately 90° about its longitudinal axis (1a) and can be moved to a storage position in the mounting frame (4),
**characterised in that**
the depth (T) of the mounting frame (4) corresponds at least to the length of the side edge (K2) of the object (1) having the medium length, and the height (H) of the mounting frame (4) corresponds at least to the length of the side edge (K2) of the object (1) having the medium length, and the mounting frame (4) has a recess (6), the extension of which in the direction of the depth (T) of the mounting frame (4) corresponds at least approximately to the length of the shortest side edge (K3) of the object (1).

2. Device according to claim 1,
**characterised in that**
the object (1) is held in the mounting frame (4) in a form-fitting and force-fitting manner.

3. Device according to claim 1 or 2,
**characterised in that**
a spring element (7) is provided in the mounting frame (4).

4. Device according to claim 3,
**characterised in that**
the spring element (7) is formed as a single piece with a wall (3a) forming the mounting frame (4).

5. Device according to claim 3 or 4,
**characterised in that**
the spring element (7) has a latching element (7a), the distance of which from the insertion opening (5) corresponds at least approximately to the length of the shortest side edge (K3) of the object (1).

6. Device according to any of claims 1 to 5,
**characterised by**
protrusions (8) extending into the insertion opening (5).

7. Device according to any of claims 1 to 6,
**characterised in that**
the object (1) is a package for a warning triangle.

8. Device according to any of claims 1 to 7,
**characterised in that**
the mounting frame (4) is provided in a lining (3) of a boot lid of the motor vehicle.

## Revendications

1. Dispositif (2) pour le logement d'un objet (1) parallélépipédique, présentant trois bords latéraux (K1, K2, K3) de longueur différente dans un véhicule automobile, avec un espace de logement (4) qui présente une ouverture d'introduction (5), dont la longueur (L) correspond au moins à la longueur du bord latéral (K1) le plus long de l'objet (1) et dont la largeur (B) correspond au moins à la longueur du bord latéral (K3) le plus court de l'objet (1), est toutefois au moins par sections plus petite que la longueur du bord latéral (K2) de l'objet (1) avec la longueur médiane, dans lequel l'espace de logement (4) présente une grandeur telle que l'objet (1) peut être tourné après son introduction par l'ouverture d'introduction (5) dans l'espace de logement (4) d'un angle d'au moins approximativement 90° autour de son axe longitudinal (1a) et peut être amené dans l'espace de logement (4) dans une position de logement,
**caractérisé en ce que**
la profondeur (T) de l'espace de logement (4) correspond au moins à la longueur du bord latéral (K2) de l'objet (1) avec la longueur médiane, et que la hauteur (H) de l'espace de logement (4) correspond au moins à la longueur du bord latéral (K2) de l'objet (1) avec la longueur médiane, et que l'espace de logement (4) présente une cavité (6), dont l'étendue en direction de la profondeur (T) de l'espace de logement (4) correspond au moins approximativement à la longueur du bord latéral (K3) le plus court de l'objet (1).

2. Dispositif selon la revendication 1,
**caractérisé en ce que**
l'objet (1) est maintenu dans l'espace de logement (4) à complémentarité de formes et à force.

3. Dispositif selon la revendication 1 ou 2,
**caractérisé en ce que**
un élément de ressort (7) est prévu dans l'espace de logement (4).

4. Dispositif selon la revendication 3,
**caractérisé en ce que**
l'élément de ressort (7) est réalisé d'un seul tenant avec une paroi (3a) formant l'espace de logement (4).

5. Dispositif selon la revendication 3 ou 4,
**caractérisé en ce que**
l'élément de ressort (7) présente un élément d'encliquetage (7a), dont la distance de l'ouverture d'introduction (5) correspond au moins approximativement à la longueur du bord latéral (K3) le plus court de l'objet (1).

6. Dispositif selon l'une des revendications 1 à 5,
**caractérisé par**
des saillies (8) s'étendant dans l'ouverture d'introduction (5).

7. Dispositif selon l'une des revendications 1 à 6,
**caractérisé en ce que**
l'objet (1) est un emballage d'un triangle d'avertissement.

8. Dispositif selon l'une des revendications 1 à 7,
**caractérisé en ce que**
l'espace de logement (4) est prévu dans un habillage (3) d'un hayon de coffre du véhicule automobile.
